# EUROPEAN PATENT APPLICATION

(11) **EP 1 728 540 A1**
(43) Date of publication of application: **06.12.2006**
(21) Application number: 06425376.8
(22) Date of filing: 01.06.2006
(51) Int. Cl.: B01D 11/04, B01D 53/26

(54) **Dehydration of recovered paint solvent and solvents used for electronic component washing by means of a liquid-liquid extraction with an aqueous solution of an inorganic hygroscopic compound**

(30) Priority: 01.06.2005 IT RM20050276
(71) Applicant: Di Lauro, Giuseppina, 00125 Acilia (RM) (IT); De Bellis, Raffaele, 00125 Acilia (RM) (IT); De Bellis, Emanuela, 00125 Acilia (RM) (IT)
(72) Inventor: Di Lauro, Giuseppina, 00125 Acilia (RM) (IT); De Bellis, Raffaele, 00125 Acilia (RM) (IT); De Bellis, Emanuela, 00125 Acilia (RM) (IT)
(74) Representative: Santi, Filippo

(57) **Abstract**

Method for the dehydration of recovery organic solvents, particularly isopropyl alcohol or a nitro mixture, and mixtures thereof, by means of liquid-liquid extraction with an inorganic solution having affinity with water, characterised in that said inorganic solution is an aqueous solution of a compound selected from: NaOH, KCOOH, LiBr.

## Description

The present invention discloses a method for reducing the water concentration in solvents and mixtures thereof obtained by means of recovery of previously industrially used solvents.

### Field of the Invention

The present invention concerns the field of purification of organic solvents and refers to an industrial process that allows the dehydration of organic solvents obtained from exhaust mixtures recovery as well as of organic solvents used for electronic components washing. More particularly it is described a process that allows, by means of a liquid-liquid extraction with an hydrophilic solution, the reduction of water concentration in solvents making them suitable for recovery and industrial use.

### State of the art

In many industrial processes use is made of solvents that, after processing, are destined to industrial waste products.

Depuration of used solvents is a great problem that is faced by means of very different strategies and only sometimes efficiently solved. Problems due to processing waste products influence industrial production not only from a process point of view but also from that of costs due to commercial solvents buyback and exhaust solvents disposal.

The most sought solution is that of recycling exhaust solvents to either the same productive process (in this case it is necessary to ensure the same purity of the commercial ones) or other productive processes accepting lower purities.

One of the problems in the use of recovered solvents is the presence of water that must be removed or at least reduced.

Purification is relatively easy for solvents containing a single compound or at most a binary mixture. In this case the recovery process comprises an evaporation in order to remove contained solids and a distillation in order to separate the two components. The distillation also allows to obtain dehydration: for some compound, such as methanol and acetone, water is separated together with the "bottoms" of the distillation column; for other compounds such as butanol and dimethyl-formamide water is separated together with the distillation "tops".

For other compounds such as ethanol and isopropyl alcohol, dehydration by means of distillation is not possible since a considerable portion of water directs toward the "bottoms" but a percentage of 4% of ethanol and 12% of isopropyl alcohol remains always in the "tops".

Dehydration of mixtures of five, ten or more components, in which water is shared between "tops" and "bottoms", is even more difficult.

Electronic industry uses isopropyl alcohol to wash electronic components removing small amounts of contained water. The isopropyl alcohol to be used has very high purities and costs. After use isopropyl alcohol contains only water as a pollutant. Dehydration would allow reusing of a high value compound allowing the reduction of working costs. On the contrary, isopropyl alcohol currently used is disposed or sold at a price ten times lower than that of purchase.

Industries recovering used solvents obtain mixtures of multicomponent solvents, recovered by means of evaporation; the product obtained is put on the market as a diluent for paints. The composition in organic solvents can be vary different; the market only requires a low concentration of water.

Producers currently use as a dehydrator an inorganic salt, calcium chloride; this compound can be used a single time and represents a considerable cost. Further polluting by-products are produced that must be disposed and further increase production costs.

A further process provided for by American and Japanese firms involves the use of semi-permeable membrane provided with microscopic pores that let water pass and stop organic compounds. Different plants are operating both in Italy and abroad. This process is in the first place very expensive because of the price and short life of membranes. Further, it is a delicate process; membranes being liable to breaking with consequent stop of the plant.

Another proposed process involves using an extractive distillation by means of a magnesium chloride solution. The used compound is very corrosive and would require a glass plant. This process remained at the research phase and was never transferred on the industrial scale.

### Detailed description of the invention

The dehydration plant according to the present invention is based on the principle of contacting the solvent or the organic mixture with an inorganic solution showing a good affinity with water. Said affinity causes the preferential passage of water from the organic (solvent) to the inorganic phase, making the solvent suitable for industrial use.

Technically this process is defined as "liquid-liquid extraction" and is a commonly used technology in the field of fine chemicals in order to extract preferably hydrophilic products in the inorganic solution of hydrophobic products in the organic solution. The process is composed of two sections:
- Extraction and demixing. In this section the solvent (organic phase) is closely contacted with the inorganic phase in one or more extraction stages. After the water transfer in the inorganic phase, the inorganic solution enriched with water is separated from the purified solvent that can be sent to reuse.
- Recovery. In this section the inorganic solution is directed to an evaporator in which the extracted water is evaporated and subsequently condensed. The inorganic solution restored the original features and can be recycled to the extraction phase.

Particularly, the method according to the present invention allows to obtain the required dehydration from the typical requirements of the reference industrial sector by means of an aqueous inorganic solutionof one of the following compounds: sodium hydroxide (NaOH), potassium formate (KCOOH) and lithium bromide (LiBr).

Therefore it is a specific object of the present invention a method for the dehydration of recovery organic solvents, particularly isopropyl alcohol or a nitro mixture, and mixtures thereof, by means of liquid-liquid extraction with an inorganic solution having affinity with water, characterised in that said inorganic solution is an aqueous solution of a compound selected from: NaOH, KCOOH, LiBr.

According to the invention, said inorganic solution contains NaOH in a concentration comprised between 20% and 90% by weight (preferably between 35% and 55% by weight), KCOOH in a concentration comprised between 20% and 90% (preferably between 60% and 75% by weight), or LiBr in a concentration comprised between 20% and 90% (preferably between 50% and 75% by weight).

Particularly, according to the invention, said inorganic solution is used in an amount comprised between 2,5 and 5 times greater than those of the organic solvent to be dehydrated.

Further, according to the present invention, the inorganic mixture can be provided with products lowering the crystallization point.

Finally, always according to the invention, downstream of the liquid-liquid extraction phase further additional dehydration phases can be provided for, by use of alumina, silica gel or molecular sieves.

In the description the following definition will be used.
- It is defined solvent the organic compound or the mixture of exhaust liquid organic compounds, coming from an industrial process, as such or already partially purified by means of other recovery processes, such as distillation.
- It is defined liquid-liquid extraction a process according to which a liquid mixture mostly of organic type is intimately contacted with a liquid mixture mostly of inorganic type and non miscible with the first mixture in order to carry out the transfer of one or more components form one mixture to the other.
- It is defined dehydration plant a device able of reducing the water concentration in solvents in order top make them suitable for being reused.
- It is defined process a method describing the technology to be applied to a series of machineries so to ensure the required performances.
- It is defined liquid-liquid extractor an apparatus inside which the organic and the inorganic mixture are kept intimately stirred in order to allow the passage of water from the organic to the inorganic phase.

Particularly, according to the present invention, in the extraction and demixing section the solvent and the inorganic mixture are intimately contacted one with the other by means of one of the following methods:
- Injection in a vessel provided with a stirrer causing the separation of the two phases in small drops and the subsequent material exchange between the organic phase and the aqueous phase in a separator in which the two phases are separated from each other; normally the organic phase directs to the upper part and the aqueous phase directs to the lower part. This method is called by American people "mixer-settler".
- Use of a plurality of "mixer-settler" in order to increase the efficiency of the material exchange.
- use of a liquid-liquid contact column provided with a mixer made of a shaft containing various stirring turbines separated by discs and followed by a liquid-liquid separation.
- use of a liquid-liquid contact column devoid of moving parts in which the mass transfer is carried out by means of filling bodies or perforated plates.
- use for the liquid-liquid separation of a simple decanting vessel.
- use for the liquid-liquid separation of a "coalescer" realised with laminar baffles or with metallic net or with granular products.

On the contrary, in the recovery section the inorganic solution containing the extracted water is directed to an exchanger heated with steam or diathermic oil or by means of an electric resistance. Evaporated water is condensed. The inorganic solution is restored to its initial condition and can be recycled to the extraction. The recovery can use one of the following methods:
- use of a single stage evaporator.
- use of a multi stage evaporator.
- use of an exchanger to preheat the incoming solution at the same time cooling the hot solution that comes out from the evaporator.

The present invention will now be described, for illustrative but non limitative purposes, according to its preferred embodiments, with particular reference to the following examples.

### Example 1.

An isopropyl alcohol solution containing water in a concentration of 8% by weight was purified by means of an aqueous solution of NaOH (50%).

High purity isopropyl alcohol used in the electronic field has a commercial cost of 2,5 €/kg. An isopropyl alcohol solution having a water concentration of about 10% can be sold at most for a few cents/kg price.

Particularly, the isopropyl alcohol organic solution was fed, together with an amount 4,5 times higher of NaOH inorganic solution, to a first extractor, composed of a vessel provided with a stirrer, in which the mixing of the organic phase with the inorganic phase was realised, by increasing the exchange surface between the two phases and consequently making easier the water transfer from one phase to the other.

The mixture was subsequently directed to a first liquid-liquid separator, at a temperature of 30°C, wherein the organic phase, at a reduced water concentration of 1,8%, was separated from the inorganic phase and was directed to a pump for being reused. On the separator bottom the inorganic phase was recovered, enriched in water, and was directed to an evaporator, in vacuum condition and at a temperature of 105°C, in which part of the water was evaporated and the inorganic phase was concentrated restoring its initial condition (50% NaOH concentration). The inorganic phase was then recycled to the extraction by means of a pump, after being taken back to an ambient temperature passing through a water or air cooled exchanger.

Dehydration involved the following expenses:
- Heating steam and electricity: 0,01 €/kg.
- Plant amortization and labour: 0,03 €/kg.
- Raw materials: 0,01 €/kg.
- TOTAL: 0,05 €/kg
- The product obtained after dehydration can be sold at a price of 2,5 €/kg.

With a total cost of 0,05 €/kg it is obtained a product the commercial value of which is 2,5 €/kg.

### Example 2.

A "nitro mixture" or "thinner", i.e. a mixture of organic compounds the density of which is 0,82 and the boiling temperature is comprised between 65 and 97°C, containing water in concentration of 9% by weight, was purified by means of an aqueous solution of KCOOH (65% by weight).

Particularly, the nitro mixture was purified in a double stage plant, at a temperature of 30°C, in countercurrent flow with respect to the inorganic solution, the last being used in an amount 4 times higher than the nitro mixture.

Following the inorganic solution flow, this was firstly fed to a first extractor made of a vessel provided with a stirrer, wherein it was mixed together with an organic phase coming from a previous liquid-liquid extraction stage.

The mixture was then directed to a first liquid-liquid separator in which the organic phase, at a reduced water concentration (1,35% by weight), was separated from the inorganic phase and directed to a pump for being reused. The inorganic phase, recovered from the separator bottom, was directed to a second extractor, composed of a vessel provided with a stirrer in which the inorganic phase coming from the first extractor was contacted with the organic phase fed to the plant.

The mixture was then directed to a second liquid-liquid separator in which the organic phase, at a reduced water concentration, was separated from the inorganic phase and directed to the first extractor by means of a pump. The inorganic phase was instead directed, by means of a pump, to an evaporator in order to be recovered, after passing through an exchanger in which the inorganic phase is preheated by the hot liquid coming from the evaporator.

In the evaporator, operated in vacuum condition at a temperature of 110°C, the inorganic phase is concentrated restoring its initial condition (KCOOH concentration of 65% by weight).

The inorganic phase was then taken by a pump and recycled to the extraction, after passing though a water or air cooled exchanger, in which the inorganic phase, already pre-cooled in the previously cited exchanger, is taken back to ambient temperature.

Dehydration involves the following expenses:
- Heating steam and electricity: 0,05 €/kg.
- Plant amortisation and labour: 0,30 €/kg.
- Raw materials: 0,25 €/kg.
- TOTAL: 0,60 €/kg

With a total cost of 0,60 €/kg it is obtained a product the commercial value of which is 2,5 €/kg.

### Example 3

An organic solution of methyl acetate containing water in a concentration of 3% by weight was purified by means of an inorganic aqueous solution of LiBr (55% by weight).

Particularly, the methyl acetate organic solution was purified by means of an amount 2,5 times higher of LiBr inorganic solution, in a plant aving the same features of that described in example 1.

The methyl acetate organic solution obtained after purification had a water concentration of 0,8%. The evaporator for recovering the inorganic solution was operated under vacuum condition at a temperature of 108°C.

The present invention was described for illustrative, non limitative purpose, according to its preferred embodiments, but it has to be deemed that any variation and/or modification can be provided by the persons skilled in the art without escaping from its scope of protection, as defined in the enclosed claims.

## Claims

1. Method for the dehydration of recovery organic solvents, particularly isopropyl alcohol or a nitro mixture, and mixtures thereof, by means of liquid-liquid extraction with an inorganic solution having affinity with water, **characterised in that** said inorganic solution is an aqueous solution of a compound selected from: NaOH, KCOOH, LiBr.

2. Method for the dehydration of recovery organic solvents according to claim 1, **characterised in that** said inorganic solution contains NaOH in a concentration comprised between 20% and 90% by weight.

3. Method for the dehydration of recovery organic solvents according to claim 2, **characterised in that** said inorganic solution contains NaOH in a concentration comprised between 35% and 55% by weight.

4. Method for the dehydration of recovery organic solvents according to claim 1, **characterised in that** the inorganic solution contains KCOOH in a concentration comprised between 20% and 90%.

5. Method for the dehydration of recovery organic solvents according to claim 4, **characterised in that** said inorganic solution contains KCOOH in a concentration comprised between 60% and 75% by weight.

6. Method for the dehydration of recovery organic solvents according to claim 1, **characterised in that** said inorganic solution contains LiBr in a concentration comprised between 20% and 90%.

7. Method for the dehydration of recovery organic solvents according to claim 6, **characterised in that** said inorganic solution contains LiBr in a concentration comprised between 50% and 75% by weight.

8. Method for the dehydration of recovery organic solvents according to any of the precedent claims, **characterised in that** said inorganic solution is used in an amount comprised between 2,5 and 5 times greater than those of the organic solvent to be dehydrated.

9. Method for the dehydration of recovery organic solvents according to any of the precedent claims, **characterised in that** products lowering the crystallization point are added to the inorganic mixture.

10. Method for the dehydration of recovery organic solvents according to any of the precedent claims, **characterised in that** downstream of the liquid-liquid extraction phase further additional dehydration phases are provided for, by use of alumina, silica gel or molecular sieves.
